# EUROPEAN PATENT APPLICATION

(11) **EP 2 644 066 A1**
(43) Date of publication of application: **02.10.2013**
(21) Application number: 12382123.3
(22) Date of filing: 30.03.2012
(51) Int. Cl.: A47J 31/38

(54) **Axial traction system and machine for preparing beverages that includes said axial traction system**

(71) Applicant: MINIMMA ESPRESSO, S.L., 08242 Manresa (ES)
(72) Inventor: Marquez Zamora, Angel, 08012 Barcelona (ES); Villegas Alcaide, Minerva, 08940 Cornellà de Llobregat (ES)
(74) Representative: Oficina Ponti, SLP

(57) **Abstract**

The system (2) to displace a shaft (3) comprises traction means (12) of said shaft (3) and actuation means (14, 22, 23, 24, 25, 26, 27, 28) of said traction means (12), and is characterized in that said traction means comprises a plurality of balls (12) capable of being engaged in a coaxial groove (13) provided on the periphery of said shaft (3), said actuation means including a fixing body (14) capable of holding said balls (12) inside said groove (13), said fixing body (14) being capable of applying a compression force on said balls (12) when said fixing body (14) is actuated in a direction of movement to exercise a traction force on said shaft (3).

## Description

The present invention relates to an axial traction system to displace a shaft and a machine for preparing beverages that includes said axial traction system.

### BACKGROUND OF THE INVENTION

Machines have been developed for preparing beverages, such as, for example, machines for preparing coffee, which have the special characteristic that the liquid pressure to obtain the coffee is provided by systems alternative to the electric pressure pump, in order to obtain autonomous machines, in which the coffee can be prepared without said pump and the problems of maintenance and low energy efficiency entailed by its use.

International patent application WO2010/11311 discloses a machine for preparing coffee of the type mentioned, wherein the pressurized liquid feed system comprises a cylinder and plunger assembly provided with a chamber for housing the water, the plunger of said chamber being able to accumulate, in an active position, potential energy from the compression force applied to a spring or fluid provided in the chamber which houses the rod of said plunger. In said patent application, the potential energy accumulated by the plunger can be transmitted in the form of pressure to the water of said chamber, when said plunger contacts, in its active position, with the water of said chamber.

Patent application WO2010/113116 discloses a traction system which acts on the plunger rod of the cylinder chamber to retract said plunger until said active position in which said plunger accumulates potential energy from the compression force applied to the spring or fluid.

The axial traction system disclosed in this patent comprises a lever associated to traction means that are configured in the form of tongs provided with teeth capable of coupling and decoupling to the toothed rod of the plunger of the cylinder chamber which houses the water. In the coupling position, said tongs enable the retraction of said rod when said lever is actuated in a determined rotation direction.

The axial traction system disclosed has the advantage that it enables the traction of the plunger rod by applying a relatively small force on the lever to overcome opposition from the fluid or spring.

However, it has been observed that, in practice, the tongs become worn, also being rather inefficient, since they are subjected to considerable bending, traction and friction forces that weaken them.

Another drawback of the traction system of said patent stems from the difficulty of designing an engagement and disengagement mechanism of the tongs that enables the simple and effective interruption of the transmission of force from the lever to the shaft.

Said engagement and disengagement mechanism is necessary to avoid the movement of the lever when the plunger rod or shaft descends in direction opposite that of movement to recover its rest position inside the cylinder whilst the pressurized liquid is fed.

### DESCRIPTION OF THE INVENTION

The objective of the present invention is to resolve said drawbacks, developing an axial traction system with the advantages described below.

In accordance with this objective, according to a first aspect, the present invention provides an axial traction system to displace a shaft, which comprises traction means of said shaft and actuation means of said traction means, and is **characterized in that** said traction means comprises a plurality of balls capable of being engaged in a coaxial groove provided on the periphery of said shaft, said actuation means including a fixing body capable of holding said balls inside said groove, said fixing body being capable of applying a compression force on said balls when said fixing body is actuated in a direction of movement to exercise a traction force on said shaft.

The axial traction system of the present invention has the advantage that the traction means is configured by a plurality of balls that work under compression inside a coaxial groove of the shaft, and not under flexion on said shaft, as occurs with the tongs of the state of the art.

Thanks to this, a much more resistant traction system is obtained that displaces the shaft in a very simple fashion, using for this a fixing body which is capable of holding the balls inside the groove of the shaft and of applying on said balls a compression force when said body is actuated in a direction of movement.

Preferably, said system comprises coupling and decoupling means of said traction means, said coupling and decoupling means including a coaxial support wedge of said balls which is disposed opposite said coaxial groove inside said fixing body, said coaxial support wedge being capable of adjusting said balls inside said groove when said fixing body is actuated in the direction of movement, said coaxial support wedge defining a decoupling ramp, said balls being capable of separating from said groove and rolling on said ramp when said fixing body is actuated in a direction opposite that of movement, whilst said shaft remains fixed.

The system of the present invention has the advantage with respect to the systems of the state of the art that the traction means, in this case the balls, can be coupled and decoupled to the shaft without wearing due to significant friction or compression. This is due to the fact that the balls, unlike the tongs of the state of the art, can be coupled and decoupled rolling on the ramp of said coaxial support wedge, which very significantly reduces the friction forces withstood by said shaft and the balls.

Again preferably, said shaft is provided with a plurality of coaxial grooves and a plurality of separating teeth of said grooves, said balls being capable of rolling from an upper groove to another lower one on the decoupling ramp of said wedge when said fixing body is actuated in the direction opposite that of movement, whilst said shaft remains fixed, the teeth that separate said grooves allowing the passage of the balls from one groove to another.

In this way, the shaft can be tractioned by discrete steps since the actuation of the body in the direction of movement is translated in a coupling of the balls in the groove which enables transmitting a traction force to the shaft. However, the actuation of the body in the direction opposite that of movement is translated in a decoupling that enables the dropping of the balls from an upper groove to another lower one of the shaft (exit of the balls from the groove and rolling of the balls on the ramp of the coaxial support wedge to the lower groove).

Advantageously, said coupling and decoupling means comprise return means of said balls to the inside of a groove when said balls are displaced on said decoupling ramp, said return means including an elastic element capable of pushing said balls along said ramp.

In this way, it guarantees the dropping of the balls inside a groove when said balls roll over said ramp from one groove to another.

Again advantageously, said return means comprise a coaxial spring disposed inside the fixing body, the free end of said spring being provided with a ring for pushing said balls.

Preferably, said balls are disposed spaced on said coaxial support wedge, the spaces between the balls including a plurality of separating elements, said plurality of separating elements configuring an engagement and disengagement part which is rotatable mounted with respect to said shaft, said engagement and disengagement part being capable of laterally displacing said balls on said coaxial support wedge from an engagement position to a disengagement position.

Again preferably, said shaft is provided with a plurality of coaxial grooves and a plurality of separating teeth of said grooves, said shaft including a plurality of longitudinal channels which score the teeth of said grooves, said balls being disposed in correspondence with said channels in said disengagement position.

When the engagement and disengagement part is actuated, the separating elements of said part rotate with respect to the shaft, laterally displacing the balls on the coaxial support wedge to place them in correspondence with the longitudinal channels which score the teeth of the grooves. These channels prevent the transmission of the force, making the movement of the fixing body and the shaft independent, leaving the system disengaged.

According to a preferred embodiment, said system comprises actuation means of said fixing body, said actuation means including a lever associated to said body, said lever being capable of actuating said body in the direction of movement of said shaft to exercise a traction force on the shaft through said balls.

The lever has the advantage that it allows alternatively actuating the fixing body of the balls enabling the traction by discrete steps of the shaft.

Preferably, said actuation means of the fixing body include a cam with eccentric profile associated to said lever, the fulcrum or bearing point of said lever coinciding with the pivot of said cam, said fixing body including the follower of said cam.

The cam with eccentric profile achieves a very high demultiplication ratio which makes it possible to generate large traction forces in the shaft from relatively small forces in the lever.

Advantageously, said lever comprises two arms each one provided with a fulcrum or bearing point, said two arms determining a fork at one end of said lever, each one of said arms configuring a cam with eccentric profile, said fixing body including a cam follower for each one of said arms.

Preferably, the fulcrums or bearing points of said lever are positioned on a support platform of said system, said platform including guides for the displacement of said fixing body.

According to a second aspect, the present invention provides a machine for preparing beverages, such as, for example, a machine for preparing coffee, wherein the axial traction system claimed is applied.

This machine comprises a cylinder and plunger assembly, said plunger defining inside its cylinder a chamber for housing a liquid, said plunger being able to accumulate, in an active position, potential energy from the compression force applied to a spring or fluid, said potential energy being capable of being transmitted as a pressure to the liquid of said chamber, when said plunger contacts, in said active position, with the liquid of said chamber, and is **characterized in that** the compression force on the spring or fluid is applied on retracting said plunger by an axial traction system like that claimed which acts on the rod or shaft of said plunger.

Preferably, said machine comprises a liquid storage tank, preferably, of liquid at atmospheric pressure, and a suction duct of said liquid which is provided in the base of said cylinder, the liquid of said tank capable of being sucked by depression through said duct on retracting said plunger.

The axial traction system claimed is especially useful for application in a machine such as that described wherein the plunger can contact under pressure the water stored in the chamber when said plunger is released by the traction system whilst the passage valve of the distribution duct remains closed.

### BRIEF DESCRIPTION OF THE DRAWINGS

For a better understanding of what has been disclosed, drawings are attached wherein, diagrammatically and only as a non-limitative example, a practical embodiment of the axial traction system applied to a machine for preparing coffee is shown.

In said drawings,
figure 1 is a section of the machine for preparing coffee that includes the axial traction system of the present invention with the balls in coupling position.
figure 2 is a detail of figure 1 that shows the components of the axial traction system of the machine.
figure 3 is a section of the machine for preparing coffee that includes the axial traction system of the present invention with the balls in decoupling position.
figure 4 is a detail of figure 3 that shows the components of the axial traction system of the machine.
figure 5 is a perspective view of the shaft that shows the engagement and disengagement part of the balls.
figures 6 and 7 are two perspective views that show two positions of the lever and eccentric cam that actuates the fixing body of the balls.

### DESCRIPTION OF A PREFERRED EMBODIMENT

An embodiment of the axial traction system applied to a machine for preparing coffee is described below.

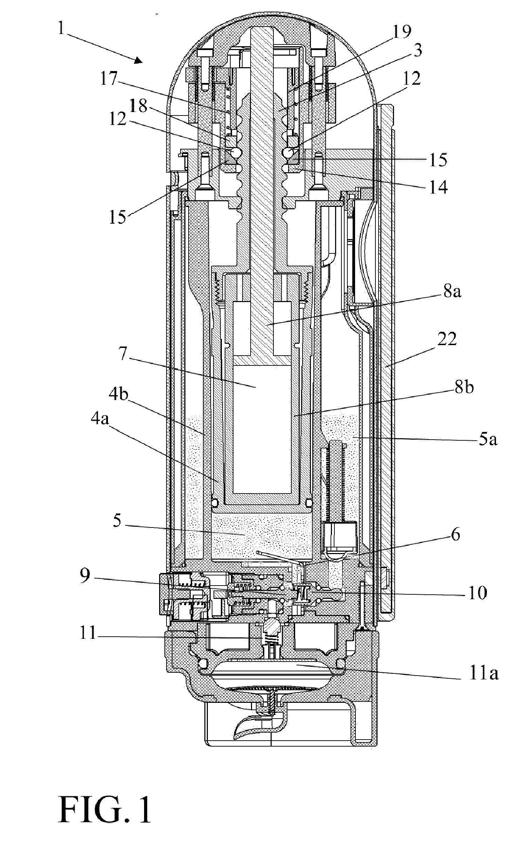

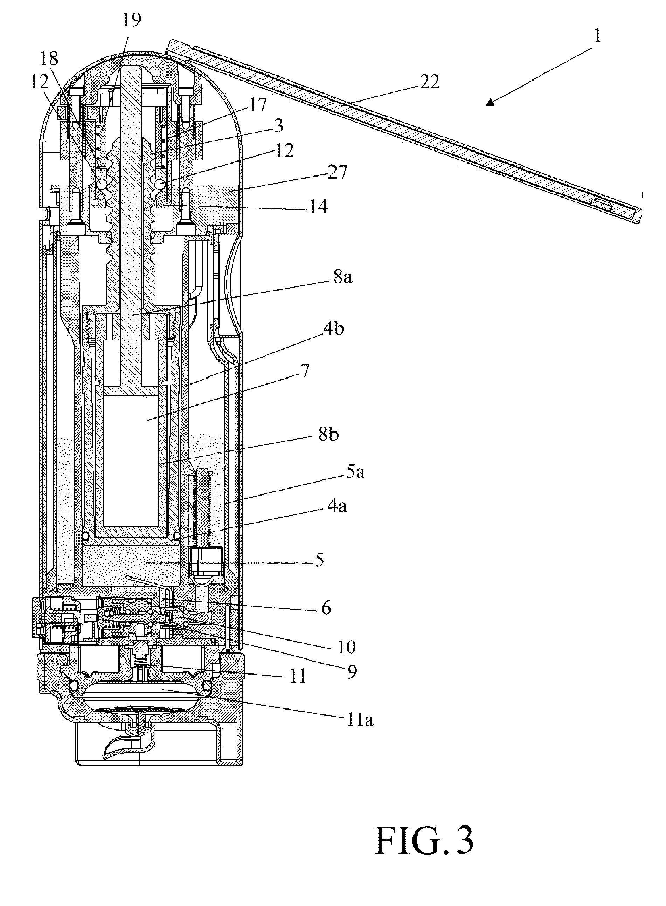

Figures 1 and 3 show two sections of a machine 1 for preparing coffee whereto the axial traction system 2 of the present invention has been applied.

In the machine 1 represented, the axial traction system 2 claimed acts on the rod or shaft 3 of a plunger 4a which defines inside its cylinder 4b a chamber 5 to house a preset quantity of water for making coffee.

As can be seen in said figures 1 and 3, the axial traction system 2 has been designed to displace the rod 3 of the plunger 4a inside its cylinder 4b. This displacement enables the entry of water from the attached tank 5a, through a suction duct 6 provided in the cylinder 4b base.

Said plunger 4a has the special characteristic that it is able to accumulate, whilst it is retracted, potential energy from the compression force applied to a fluid located in the inner chamber 7 of a second cylinder 8b and plunger 8a assembly which is associated to said first cylinder 4b and plunger 4a assembly.

The potential energy accumulated by the plunger 4a is capable of being transmitted as a pressure to the water of said chamber 5, when the plunger 4a contacts with the water of said chamber 5.

In the machine shown, the pressurized water is fed whilst the plunger 4a recovers its rest position inside chamber 5, once valve 9 is open, which communicates with the duct 11 and an infusion chamber 11a.

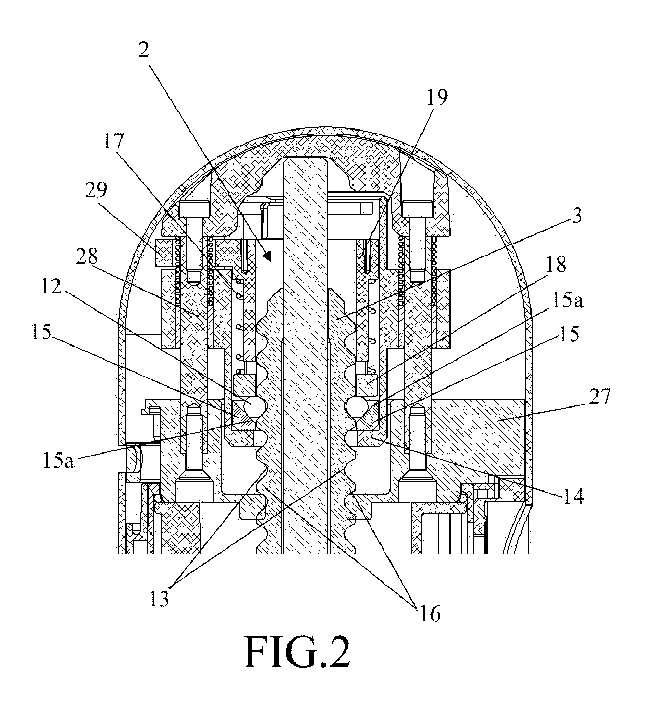

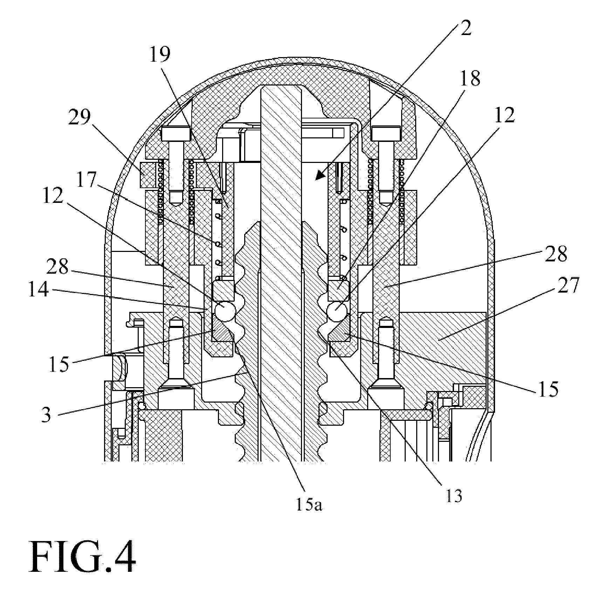

Returning to the axial traction system 2 object of this patent application and in light of figures 2 and 4, it is necessary to highlight that the system 2 is **characterized in that** the traction means of the shaft 3 or rod of the plunger 4b are mainly formed by a plurality of balls 12 capable of being engaged in a coaxial groove 13 provided on the periphery of said shaft 3. Said balls 12 are actuated by a fixing body 14 which is capable of being actuated in the direction of movement of the shaft or rod 3.

As has been commented in the description of the invention, in the system 2 of the present invention, the traction means, i.e. the balls 12, work under compression inside the coaxial groove 13 of the shaft 3, and not under flexion on said shaft 3, as occurs with the tongs of the state of the art. Thanks to this, a traction system 2 is obtained which is much more resistant and which makes it possible to displace the shaft 3 very simply.

Figure 2 shows a detail of a section of the axial traction system 2 of the machine 1 with the traction means, i.e. the balls 12, disposed in coupling position. In this position, a coaxial support wedge 15 of the balls 12 is disposed opposite the coaxial groove 13 inside the fixing body 14, said coaxial support wedge 15 being the one which makes it possible to adjust the balls 12 inside the groove 13 when the body 14 is actuated in the direction of movement of the shaft 3.

Figure 4 is a section analogous to that of figure 2 wherein the traction means of the system 2, i.e. the balls 12, are disposed in decoupling position. In this position, a ramp 15a of the coaxial support wedge enables the separation of the balls 12 from the shaft 3 when actuating the fixing body 14 in a direction opposite that of movement, whilst the shaft 3 remains fixed.

In light of figures 2 and 4, it is observed that the shaft 3 is provided with a plurality of coaxial grooves 13 and a plurality of separating teeth 16 of said grooves 13, so that the balls 12 are capable of rolling from an upper groove 13 to another lower one on the ramp 15a of the coaxial support wedge 15. This detail has the advantage that it enables the traction of the shaft 3 by discrete steps, through the alternative movement of the fixing body 14.

Indeed, in the system 2 of the present invention, the actuation of the body 14 in the direction of movement of the shaft 3 is translated in a coupling of the balls 12 in the groove 13 which makes it possible to transmit a traction force to the shaft 3. However, the actuation of the body 14 in the direction opposite that of movement is translated in a decoupling that enables the dropping of the balls 12 from an upper groove 13 to another lower one of the shaft 3 (exit of the balls 12 from the groove 13 and rolling of the balls 12 on the ramp 15a of the coaxial support wedge 15 to a lower groove 13).

To guarantee the dropping or return of the balls 12 to the inside of the groove 13 when the balls 12 are displaced on the ramp 15a, a coaxial spring 17 has been provided inside the body 14 equipped with a ring 18 for pushing said balls 12 along said ramp 15a.

In the embodiment described, the coaxial spring 17 is mounted on an engagement and disengagement part 19 of the system 2 which enables the fixing body 14 to be independent from the shaft 3 (see figures 2 and 4).

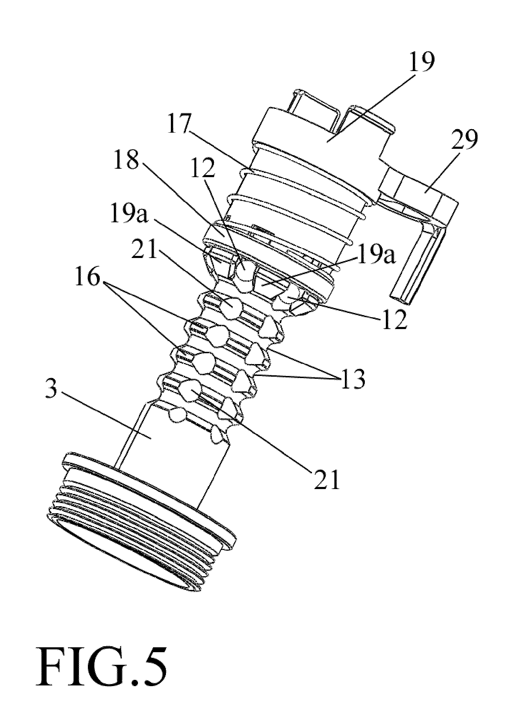

Figure 5 shows a perspective view of the shaft 3 and of the engagement and disengagement part 19 associated to said shaft 3. In this figure 5, neither the body 14 nor the coaxial support wedge 15 have been shown to facilitate understanding of the drawing.

As can be seen in this figure 5, the engagement and disengagement part 19 is mounted gyratory with respect to the shaft 3 and includes a plurality of separating elements 19a of the balls 12 which occupy the spaces between balls 12. When the part 19 rotates with respect to the shaft 3, the separating elements 19a displace the balls 12 laterally on the coaxial support wedge 15 from an engagement position to a disengagement position or vice-versa.

Figure 5 shows the balls 12 situated in the disengagement position. In this position, these balls 12 are disposed in correspondence with longitudinal channels 21 which score the teeth 16 of the grooves 13. These channels 21 prevent the transmission of the force, making the movement of the body 14 and the shaft 3 independent, so that the system 2 is disengaged.

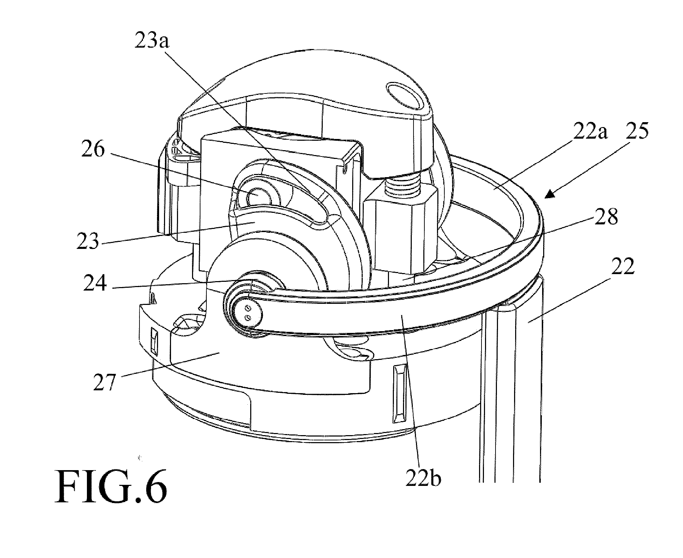

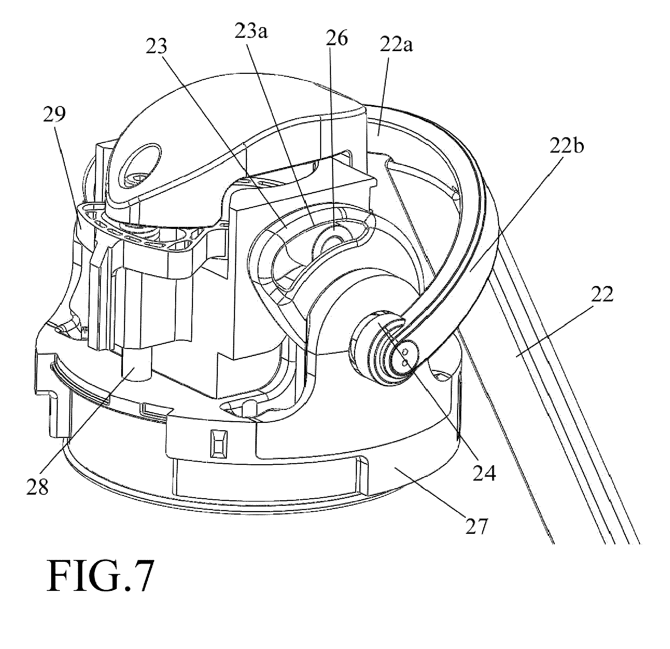

Making reference to figures 6 and 7, the actuation means of the fixing body 14 are now described, configured by a lever 22 and a cam 23 with eccentric profile 23a associated to said lever 22. The pivot 24 of the cam 23 coincides with the fulcrum or bearing point of the lever 22.

As can be seen in figure 6, in the embodiment described the lever 22 comprises two arms 22a, 22b that determine a fork 25 at one end of the lever 22. Furthermore, each one of said arms 22a, 22b configures a cam 23 with eccentric profile with a cam follower 26 situated on each side of the outer wall of the fixing body 14.

In the embodiment described, the fulcrums or bearing points of the lever 22 are positioned on a support platform 27 of the system 2 which is situated in the upper part of the machine 1 for preparing coffee.

As can be seen in the sections of figures 2 and 4, the platform 27 includes guides 28 for the displacement of the fixing body 14. A rotation handle 29 of the engagement and disengagement part 19 of the system 2 is also mounted on these guides 28.

The operation is described below of the axial traction system 2, making reference to the machine 1 for preparing coffee that includes said system 2.

In the embodiment described, the axial traction system 2 has been designed to displace the rod 3 of the plunger 4a inside its cylinder 4b. This displacement enables the intake of water from an attached tank 5a, through a suction duct 6 provided in the base of the cylinder 4b that includes a valve 10 to prevent the return of the liquid or water to the tank 5a.

Said plunger 4a has the special characteristic that it is capable of accumulating, whilst it is retracted, potential energy from the compression force applied to a fluid situated in the inner chamber 7 of a second cylinder 8b and plunger 8a assembly that is associated to said first cylinder 4b and plunger 4a assembly.

The potential energy accumulated by the plunger 4a is capable of being transmitted as pressure to the water of said chamber 5, when the plunger 4a contacts with the water of said chamber 5. The pressurized water is fed to an infusion chamber 11a, once a valve 9 provided in a distribution duct 11 of said machine 1 is open.

In the position shown in figure 1, the lever 22 and the fixing body 14 have finalized a working stroke and the traction balls 12 of the system 2 are coupled to the shaft 3 holding the plunger 4a in an active position.

In this active position;
- the plunger 4a accumulates potential energy from the compression force applied to the fluid situated in the inner chamber 7 of the second cylinder 8b and plunger 8a assembly, and
- the water chamber 5 that defines the plunger 4a is full of water from an attached tank 5a. This water has been sucked on retracting the plunger 4a, through a suction duct 6 provided in the base of the cylinder 4b.

To continue with the retraction of the shaft or rod 3, the lever 22 is actuated upwards to displace the body 14 in the direction opposite that of movement of the shaft 3, as shown in figure 3.

The displacement of the body 14 in the direction opposite that of movement causes the decoupling of the traction 12 balls from the coaxial groove 13 and the release of the shaft 3, which maintains its position contacting under pressure with the water stored in the chamber 5 of the cylinder 4b.

In the position shown in figure 3, the shaft 3 of the plunger 4a remains fixed supported by the water stored in the chamber 5 (the distribution valve 9 and the non-return valve 10 remain closed). In this position, whilst the body 14 is displaced in the direction opposite that of movement, the balls 12 are dropped on the ramp 15a of the coaxial support wedge 15 to be placed in a lower groove 13, from where it is possible to perform a new working stroke.

In the embodiment described, the lever 22 is successively actuated to retract the shaft 3 and the plunger 4a to a position (not shown) wherein the chamber 5 accumulates the necessary volume of water to prepare a dose of coffee. Once this moment has been reached, the engagement and disengagement part 19 is actuated to displace the traction balls 12 to the disengagement position wherein said balls 12 are in correspondence with the channels 21 of the shaft 3 which prevent the transmission of the force of the lever 22. In this disengagement position, the shaft 3 is again released, contacting under pressure the water stored in the chamber 5 (the distribution valve 9 and the non-return valve 10 remain closed).

To prepare the coffee, the valve 9 which communicates with the distribution duct 11 and the infusion chamber 11a is opened, it being possible to feed the pressurized water whilst the plunger 4a recovers its resting position inside the chamber 5 on releasing the accumulated potential energy.

During said distribution process, the shaft 3 is continuously displaced without the lever 22 moving thanks to the fact that the system remains disengaged by the engagement and disengagement part 19.

Even though a specific embodiment of the present invention has been described and shown, it is apparent that a person skilled in the art can introduce variations and modifications, or substitute the details by other technically equivalent ones, without departing from the scope of protection defined by the attached claims.

For example, although reference has been made in the present specification to actuation means of the fixing body 14 configured by a lever 22 mechanism, said body 14 could be actuated by another type of means which may equally enable the displacement of said body 14 at least in a direction of movement to exercise the traction force on the shaft 3. Likewise, even though reference is made in the preferred embodiment to an axial traction system 2 applied to a machine for preparing coffee, it is evident that the same system 2 could be applied to any other type of equivalent machine where it were necessary to perform a traction force on a shaft.

## Claims

1. Axial traction system (2) to displace a shaft (3), which comprises traction means (12) of said shaft (3) and actuation means (14, 22, 23, 24, 25, 26, 27, 28) of said traction means (12), **characterized in that** said traction means comprises a plurality of balls (12) capable of being engaged in a coaxial groove (13) provided on the periphery of said shaft (3), said actuation means including a fixing body (14) capable of holding said balls (12) inside said groove (13), said fixing body (14) being capable of applying a compression force on said balls (12) when said fixing body (14) is actuated in a direction of movement to exercise a traction force on said shaft (3).

2. Axial traction system (2) according to claim 1, which comprises coupling means of said traction means, said coupling means including a coaxial support wedge (15) of said balls (12) which is disposed opposite said coaxial groove (13) inside said fixing body (14), said coaxial support wedge (15) being capable of adjusting said balls (12) inside said groove (13) when said fixing body (14) is actuated in the direction of movement of said shaft (13).

3. Axial traction system (2) according to claim 2, which comprises decoupling means of said traction means, said decoupling means including a ramp (15a) of said coaxial support wedge (15), said balls being capable (12) of separating from said groove (13) and rolling on said ramp (15a) when said fixing body (14) is actuated in a direction opposite that of movement, whilst said shaft remains fixed (3).

4. System (2) according to claim 3, wherein said shaft (3) is provided with a plurality of coaxial grooves (13) and a plurality of separating teeth (16) of said grooves (13), said balls (12) being capable of rolling from an upper groove (13) to another lower one on the decoupling ramp (15a) of said wedge (15) when said fixing body (14) is actuated in the direction opposite that of movement, whilst said shaft (3) remains fixed, the teeth (16) that separate said grooves (13) allowing the passage of the balls (12) from one groove (13) to another.

5. System (2) according to any of claims 3 to 4, wherein said coupling and decoupling means comprises return means (17, 18) of said balls (12) to the inside of a groove (13) when said balls (12) are displaced on the decoupling ramp (15a) of said wedge (15), said return means including an elastic element (17) capable of pushing said balls along said ramp (15a).

6. System (2) according to claim 5, wherein said return means comprises a coaxial spring (17) disposed inside the fixing body (14), the free end of said spring (17) being provided with a ring (18) for pushing said balls (12).

7. System (2) according to any of claims 2 to 6, wherein said balls (12) are disposed spaced on said coaxial support wedge (15), the spaces between the balls (12) including a plurality of separating elements (19a), said plurality of separating elements (19a) configuring an engagement and disengagement part (19) which is rotatable mounted with respect to said shaft (3), said engagement and disengagement part (19) being capable of displacing said balls (12) laterally on said coaxial support wedge (15) from an engagement position to a disengagement position.

8. System (2) according to claim 7, wherein said shaft (3) is provided with a plurality of coaxial grooves (13) and a plurality of separating teeth (16) of said grooves (13), said shaft (3) including a plurality of longitudinal channels (21) which score the teeth (16) of said grooves (13), said balls (12) being disposed in correspondence with said channels (21) in said disengagement position.

9. System (2) according to any of the preceding claims, which comprises actuation means of said fixing body (14), said actuation means including a lever (22) associated to said body (14), said lever (22) being capable of actuating said body (14) in the direction of movement of said shaft (3) to exercise a traction force on said shaft (3).

10. System (2) according to claim 9, wherein said actuation means of the fixing body (14) includes a cam (23) with eccentric profile (23a) associated to said lever (22), the fulcrum or bearing point of said lever (22) coinciding with the pivot (24) of said cam (23), said fixing body (14) including the follower (26) of said cam (23).

11. System (2) according to any of claims 9 to 10, wherein said lever (22) comprises two arms (22a, 22b) each one provided with a fulcrum or bearing point, said two arms (22a, 22b) determining a fork (25) at one end of said lever (22), each one of said arms (22a, 22b) configuring a cam (23) with eccentric profile (23a), said fixing body including (14) a cam follower (26) for each one of said arms (22a, 22b).

12. System (2) according to any of claims 10 to 11, wherein said fulcrums or bearing points of said lever (22) are positioned on a support platform (27) of said system (2), said platform (27) including guides (28) for the displacement of said fixing body (14).

13. Machine (1) for preparing beverages, such as, for example, a machine for preparing coffee, which comprises a cylinder (4b) and plunger (4a) assembly, said plunger (4a) defining inside its cylinder (4b) a chamber (5) to house a liquid, said plunger (4a) being able to accumulate, in an active position, potential energy from the compression force applied to a spring or fluid, said potential energy capable of being transmitted as a pressure to the liquid of said chamber (5), when said plunger (4a) contacts, in said active position, with the liquid of said chamber (5), **characterized in that** said compression force is applied on retracting said plunger (4a) by an axial traction system (2) according to any of claims 1 to 12 which acts on the rod or shaft (3) of said plunger (4a).

14. Machine (1) according to claim 13, which comprises a liquid storage tank (5a) and a suction duct (6) of said liquid which is provided in the base of said cylinder (4b), the liquid of said tank (5a) capable of being sucked through said duct (6) on retracting said plunger (4a).

15. Machine (1) according to claim 14, wherein said tank is a liquid storage tank (5a) at atmospheric pressure.
